# EUROPEAN PATENT SPECIFICATION

(11) **EP 4 057 061 B1**
(45) Date of publication and mention of the grant of the patent: **12.02.2025**
(21) Application number: 20903560.9
(22) Date of filing: 02.12.2020
(51) Int. Cl.: G03B 15/03, G03B 15/05, H04N 23/663, H04N 23/74

(54) **PHOTOGRAPHING SYSTEM, CONTROL METHOD, AND PROGRAM**
FOTOGRAFIERSYSTEM, STEUERUNGSVERFAHREN UND PROGRAMM
SYSTÈME DE PHOTOGRAPHIE, PROCÉDÉ DE COMMANDE, ET PROGRAMME

(30) Priority: 16.12.2019 JP 2019226865
(43) Date of publication of application: 14.09.2022
(73) Proprietor: Sony Group Corporation, Tokyo 108-0075 (JP)
(72) Inventor: SUGAWARA Yasunori, Tokyo 108-0075 (JP); TAKAGI Hiroshi, Tokyo 108-0075 (JP); TAKANO Kengo, Tokyo 108-0075 (JP); KIMURA Jumpei, Tokyo 108-0075 (JP); MINAMI Hiroaki, Tokyo 108-0075 (JP)
(74) Representative: D Young & Co LLP
(86) International application number: PCT/JP2020/044800
(87) International publication number: WO 2021/124885

(56) References cited:
- JP-A- 2000 089 308
- JP-A- 2000 089 308
- JP-A- 2001 242 511
- JP-A- H0 545 706
- JP-A- H09 101 555
- JP-B2- 6 220 269
- US-A1- 2002 061 192
- US-A1- 2013 004 152
- US-A1- 2013 155 316
- US-A1- 2015 195 445

## Description

### TECHNICAL FIELD

The present disclosure relates to an imaging system, a control method, and a program, and more particularly to an imaging system, a control method, and a program capable of optimizing a release time lag.

### BACKGROUND ART

Conventionally, in an imaging system including a camera and an external flash, an external flash device is mounted on a mounting unit (so-called hot shoe) provided on the top of a body of the camera, and imaging is performed such that light is emitted from the external flash device in synchronization with imaging by the camera. Further, in the imaging system, a plurality of external flashes having a wireless communication function can be placed without being attached to the camera, and light emission of those external flashes can be controlled via wireless communication.

For example, Patent Document 1 discloses an imaging device that detects connection with an external strobe and communicates with the external strobe attached to a connection unit.

### CITATION LIST

### PATENT DOCUMENT

Patent Document 1: Japanese Patent Application Laid-Open No. 2006-64763
Other prior art is described in US 2002/061192A, US 2015/195445A, US 2013/155316A and US 2013/004152A.

### SUMMARY OF THE INVENTION

### PROBLEMS TO BE SOLVED BY THE INVENTION

By the way, performance of communication between a camera and an external flash has been improved in recent years, and the performance is assumed to be further improved. For example, optimization of a release time lag is required.

The present disclosure has been made in view of such a circumstance, and an object thereof is to optimize a release time lag.

### SOLUTIONS TO PROBLEMS

An imaging system according to one aspect of the present disclosure is provided in claim 1.

A control method or a program according to one aspect of the present disclosure is provided in claims 7 and 8 of the application.

In one aspect of the present disclosure, a light emission preparation time from when reception of a light emission command is completed until when a light emission trigger is acceptable is transmitted, communication is performed with an external flash, the light emission preparation time is acquired, and an output timing of the light emission trigger is optimized on the basis of the light emission preparation time.

### BRIEF DESCRIPTION OF DRAWINGS

Fig. 1 illustrates a configuration example of an embodiment of an imaging system to which the present technology is applied.
Fig. 2 is a block diagram showing a functional configuration example of an imaging system.
Fig. 3 illustrates an example of a communication sequence in a first communication standard.
Fig. 4 illustrates an example of a communication sequence in a second communication standard.
Fig. 5 is an explanatory diagram of transition between a synchronous mode and an asynchronous mode and a light emission preparation time.
Fig. 6 illustrates an example of a normal main light emission sequence for emitting a flash.
Fig. 7 illustrates an example of a high-speed synchronization main light emission sequence for emitting flat light.
Fig. 8 is an explanatory diagram of a cancel signal.
Fig. 9 illustrates a first notification example of a light emission information notification and a light emission timing notification at the time of preliminary light emission.
Fig. 10 illustrates a second notification example of a light emission information notification and a light emission timing notification at the time of preliminary light emission.
Fig. 11 illustrates a first notification example of a light emission information notification and a light emission timing notification at the time of main light emission.
Fig. 12 illustrates a second notification example of a light emission information notification and a light emission timing notification at the time of main light emission.
Fig. 13 is a flowchart showing optimization processing executed in a camera body.
Fig. 14 is a flowchart showing optimization processing executed in a commander.
Fig. 15 is a flowchart showing optimization processing executed in a receiver.
Fig. 16 is a block diagram showing a configuration example of an embodiment of a computer to which the present technology is applied.

### MODE FOR CARRYING OUT THE INVENTION

Hereinafter, specific embodiments to which the present technology is applied will be described in detail with reference to the drawings.

### <Configuration example of imaging system>

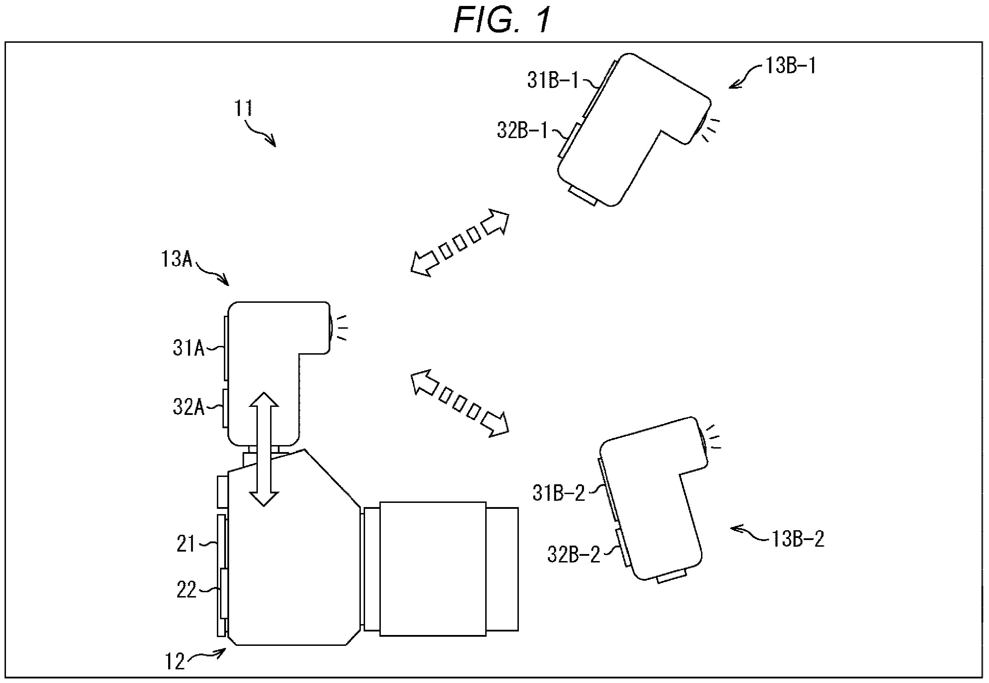

Fig. 1 illustrates a configuration example of an embodiment of an imaging system to which the present technology is applied.

As illustrated in Fig. 1, an imaging system 11 includes a camera body 12, an external flash 13A mounted on the camera body 12, and external flashes 13B-1 and 13B-2 not mounted on the camera body 12. Note that the external flashes 13B-1 and 13B-2 are also attachable to the camera body 12, and, hereinafter, in a case where it is unnecessary to distinguish the external flash 13A and the external flashes 13B-1 and 13B-2, those external flashes will be simply referred to as the external flashes 13 as appropriate.

The camera body 12 includes a display unit 21 and an operation unit 22. The display unit 21 displays an image captured by the camera body 12, various setting screens, and the like. The operation unit 22 is provided with a shutter button operated to perform imaging by using the camera body 12, a setting button operated to perform various settings by using the setting screens displayed on the display unit 21, and the like.

Each external flash 13 includes a display unit 31 and an operation unit 32. The display unit 31 displays a setting screen for performing settings for the external flash 13. The operation unit 32 is provided with a setting button operated to perform the settings for the external flash 13 by using the setting screen displayed on the display unit 21.

Here, in the imaging system 11, the external flash 13A can communicate with the camera body 12 via an electrical contact of a mounting unit provided in the camera body 12. Meanwhile, in the imaging system 11, the external flashes 13B-1 and 13B-2 can communicate with the external flash 13A via wireless communication using radio waves. That is, the external flash 13A can directly communicate with the camera body 12 to transmit commands to the external flashes 13B-1 and 13B-2, and the external flashes 13B-1 and 13B-2 can receive the commands and operate.

Therefore, hereinafter, the external flash 13A will also be referred to as a commander 13A, and the external flashes 13B-1 and 13B-2 will also be referred to as receivers 13B-1 and 13B-2 as appropriate.

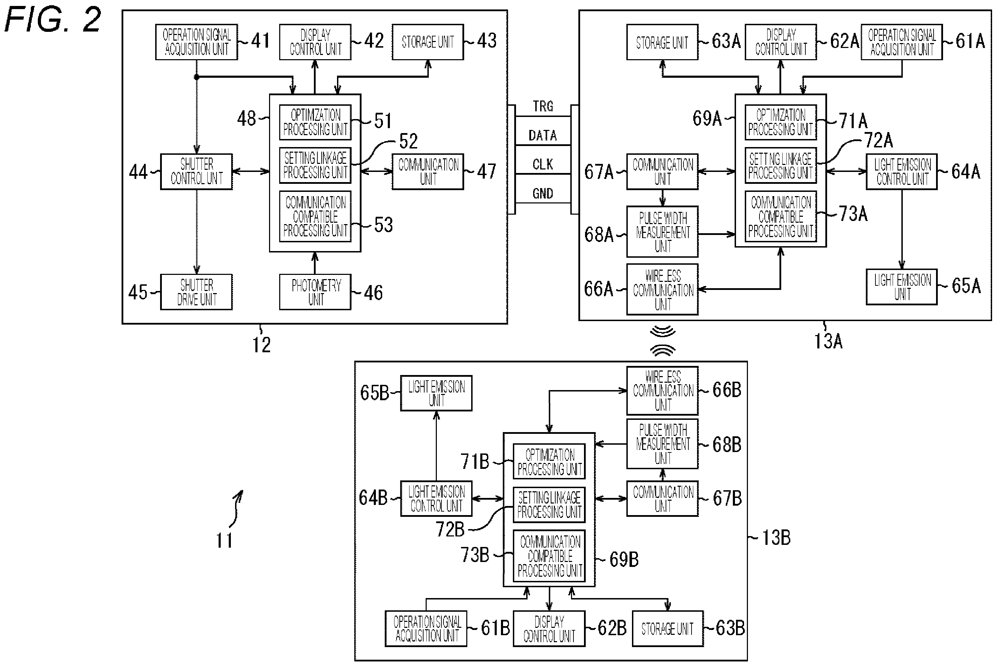

Fig. 2 is a block diagram showing a functional configuration example of the imaging system 11.

As shown in Fig. 2, when the commander 13A is mounted on the camera body 12 in the imaging system 11, the camera body 12 and the commander 13A are electrically connected via four signal lines (TRG, DATA, CLK, GND) and can therefore communicate with each other. Further, the commander 13A and the receiver 13B can perform wireless communication.

The camera body 12 includes an operation signal acquisition unit 41, a display control unit 42, a storage unit 43, a shutter control unit 44, a shutter drive unit 45, a photometry unit 46, a communication unit 47, and a control unit 48.

When the operation unit 22 of Fig. 1 is operated, the operation signal acquisition unit 41 acquires an operation signal corresponding to the operation. For example, when the shutter button of the operation unit 22 is fully pressed, the operation signal acquisition unit 41 acquires an operation signal indicating that the shutter button has been fully pressed and supplies the operation signal to the shutter control unit 44 and the control unit 48. Further, when the setting button of the operation unit 22 is operated, the operation signal acquisition unit 41 acquires an operation signal indicating that an instruction on a setting associated with the setting button has been issued and supplies the operation signal to a setting linkage processing unit 52 of the control unit 48.

The display control unit 42 can control display on the display unit 21 of Fig. 1 and, for example, can control display or non-display of the setting screens of the external flashes 13 in accordance with setting linkage processing by the setting linkage processing unit 52 of the control unit 48.

The storage unit 43 stores various pieces of data necessary for the control unit 48 to control the camera body 12. For example, the storage unit 43 can store setting information of the commander 13A acquired by the communication unit 47 communicating with the commander 13A, setting information of the receiver 13B acquired via the commander 13A, and the like. Here, various setting values are registered in the setting information of each external flash 13, such as a light emission mode and a light distribution type of the external flash 13, brightness of AF assist light, and the number of times of test light emission.

For example, when the operation signal indicating that the shutter button has been fully pressed is supplied from the operation signal acquisition unit 41, the shutter control unit 44 controls the shutter drive unit 45 so that an imaging element (not shown) is exposed for an appropriate exposure time. At this time, the shutter control unit 44 can control, for example, a timing of exposing the imaging element in accordance with optimization processing by an optimization processing unit 51 of the control unit 48.

The shutter drive unit 45 drives a front curtain and a rear curtain (both are not shown) for adjusting the exposure time of the imaging element under the control of the shutter control unit 44.

The photometry unit 46 includes, for example, an optical sensor or the like, measures an amount of light with which a subject is irradiated by light emission from the external flashes 13, and supplies a photometry result obtained by the measurement to the optimization processing unit 51 of the control unit 48.

The communication unit 47 communicates with the commander 13A via the four signal lines (TRG, DATA, CLK, GND) under the control of the control unit 48. Here, in the imaging system 11, the communication unit 47 is assumed to perform communication according to two communication standards, i.e., a first communication standard and a second communication standard, and can perform communication while transitioning between those communication standards in accordance with communication compatible processing by a communication compatible processing unit 53 of the control unit 48. Note that the second communication standard is compatible with the first communication standard, and a device compatible with the second communication standard can perform communication according to the first communication standard. Meanwhile, a device compatible only with the first communication standard cannot perform communication according to the second communication standard.

The control unit 48 performs control necessary for the camera body 12 to perform imaging. Further, as shown in Fig. 2, the control unit 48 includes the optimization processing unit 51, the setting linkage processing unit 52, and the communication compatible processing unit 53.

For example, the optimization processing unit 51 recognizes a light emission preparation time issued as a notification from the commander 13A and executes optimization processing necessary for the entire imaging system 11 to optimize a release time lag. Here, the light emission preparation time indicates a time from when the external flash 13 is instructed to emit light until when the external flash 13 can accept a light emission trigger, and the release time lag indicates a time from when the shutter button is fully pressed until when imaging is actually performed. The optimization processing unit 51 executes the optimization processing as described above, and this makes it possible to reduce the release time lag or make the release time lag constant in the imaging system 11.

For example, in a case where operations for performing the settings for the external flashes 13 are performed in the camera body 12 and in a case where the above operations are performed in the external flashes 13, the setting linkage processing unit 52 executes setting linkage processing necessary for linking the settings performed by both the operations. The setting linkage processing unit 52 executes the setting linkage processing as described above, and therefore, the settings for the external flashes 13 can be achieved by operating the camera body 12 in the imaging system 11.

For example, in a case where both the external flash 13 compatible with the second communication standard and the external flash 13 compatible with the first communication standard are assumed to exist, the communication compatible processing unit 53 executes communication compatible processing necessary for maintaining communication compatibility. The communication compatible processing unit 53 executes the communication compatible processing as described above, and therefore the imaging system 11 can cope with various cases where both the first communication standard and the second communication standard are assumed to exist.

The commander 13A includes an operation signal acquisition unit 61A, a display control unit 62A, a storage unit 63A, a light emitting control unit 64A, a light emitting unit 65A, a wireless communication unit 66A, a communication unit 67A, a pulse width measurement unit 68A, and a control unit 69A. Note that the receiver 13B is configured in a similar manner to the commander 13A, and thus, a configuration of the commander 13A will be here described, and description of a configuration of the receiver 13B will be omitted.

When the operation unit 32A of Fig. 1 is operated, the operation signal acquisition unit 61A acquires an operation signal corresponding to the operation. For example, when the setting button of the operation unit 32A is operated, the operation signal acquisition unit 61A acquires an operation signal indicating that an instruction on a setting associated with the setting button has been issued and supplies the operation signal to the control unit 69A.

The display control unit 62A performs control to display the setting screen on the display unit 31A of Fig. 1 under the control of the control unit 69A.

The storage unit 63A stores various pieces of data necessary for the control unit 69A to control the commander 13A, setting information set in the commander 13A, and the like.

The light emitting control unit 64A controls light emission of the light emitting unit 65A in accordance with a light emission trigger output from the camera body 12 in response to an operation of fully pressing the shutter button.

The light emitting unit 65A emits light under the control of the light emitting control unit 64A.

The wireless communication unit 66A performs wireless communication with a wireless communication unit 66B of the receiver 13B under the control of the control unit 69A.

The communication unit 67A communicates with the camera body 12 via the four signal lines (TRG, DATA, CLK, GND) under the control of the control unit 69A. Here, in the imaging system 11, the communication unit 67A is assumed to perform communication according to the two communication standards, **i.e.,** the first communication standard and the second communication standard.

The pulse width measurement unit 68A measures a pulse width of a signal transmitted at a predetermined clock cycle via the signal line CLK. Then, when measuring a pulse width different from a pulse width normally used in the second communication standard, the pulse width measurement unit 68A detects that a cancel signal indicating cancellation of communication at that time has been output from the camera body 12 and supplies a cancel detection signal indicating the detection to an optimization processing unit 71A of the control unit 69A.

The control unit 69A performs control necessary for the commander 13A to emit light in synchronization with imaging by the camera body 12. Further, as shown in Fig. 2, the control unit 69A includes the optimization processing unit 71A, a setting linkage processing unit 72A, and a communication compatible processing unit 73A.

The optimization processing unit 71A executes optimization processing with the optimization processing unit 51 of the camera body 12. For example, the optimization processing unit 71A acquires the light emission preparation times of all the receivers 13B by wireless communication via the wireless communication unit 66A, selects the longest light emission preparation time from among the light emission preparation times of all the external flashes 13 included in the imaging system 11 including the light emission preparation time of the commander 13A itself, and notifies the optimization processing unit 51 of the camera body 12 via the communication unit 67A.

The setting linkage processing unit 72A executes the setting linkage processing with the setting linkage processing unit 52 of the camera body 12.

The communication compatible processing unit 73A executes the communication compatible processing with the communication compatible processing unit 53 of the camera body 12.

The imaging system 11 configured as described above can optimize the release time lag.

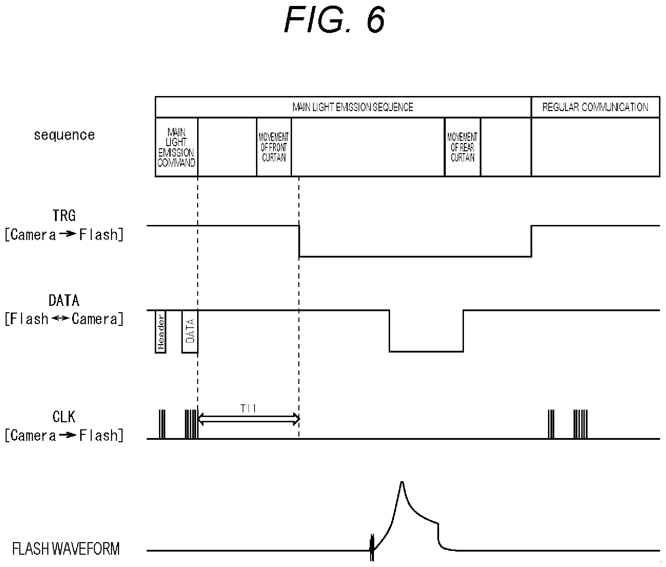

For example, in the imaging system 11, the external flash 13 issues a notification of the light emission preparation time (e.g., a light emission preparation time T11 in Fig. 6 described later) to the camera body 12 via communication according to the second communication standard, and the optimization processing unit 51 can reduce the release time lag on the basis of the light emission preparation time. For example, in a configuration in which the camera body 12 is not notified of the light emission preparation time from the external flash 13, the camera body 12 needs to perform control regarding imaging so as to cope with the longest light emission preparation time estimated among various external flashes 13 that may be used. Meanwhile, the imaging system 11 only needs to perform control regarding imaging on the basis of the light emission preparation time of the external flash 13 to be used and does not need to cope with the estimated longest light emission preparation time. This makes it possible to reduce the release time lag.

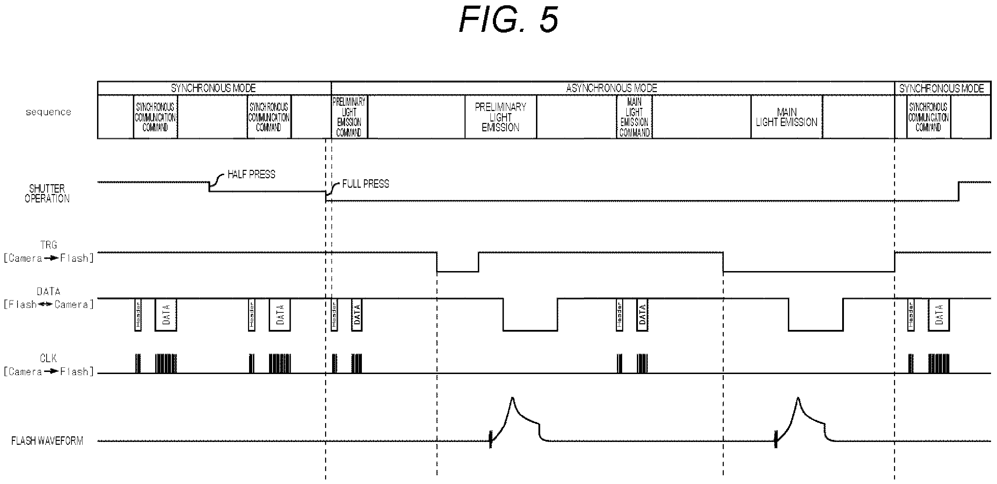

Further, as described above, the communication unit 47 and the communication unit 67A can perform communication according to the two communication standards, i.e., the first communication standard and the second communication standard in the imaging system 11. Communication is performed by a fixed data method in the first communication standard, whereas communication is performed by a command method in the second communication standard. The command method is adopted in the second communication standard as described above, and therefore, for example, only the minimum data necessary for the external flash 13 to emit light needs to be transmitted from the camera body 12 to the external flash 13 in an asynchronous mode as described below with reference to Fig. 5. This also makes it possible to reduce the release time lag in the imaging system 11.

### <Optimization of release time lag>

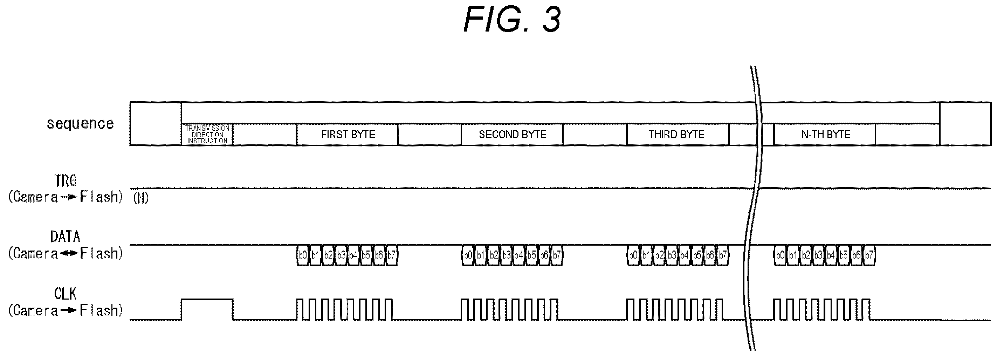

Optimization of the release time lag according to the second communication standard will be described with reference to Figs. 3 to 13.

Fig. 3 illustrates an example of a communication sequence in the first communication standard.

As illustrated in Fig. 3, in the first communication standard, first, a signal giving an instruction on a transmission direction between the camera body 12 and the commander 13A is transmitted from the camera body 12 to the commander 13A via the signal line CLK. Thereafter, command data is transmitted and received between the camera body 12 and the commander 13A at a predetermined interval for each byte.

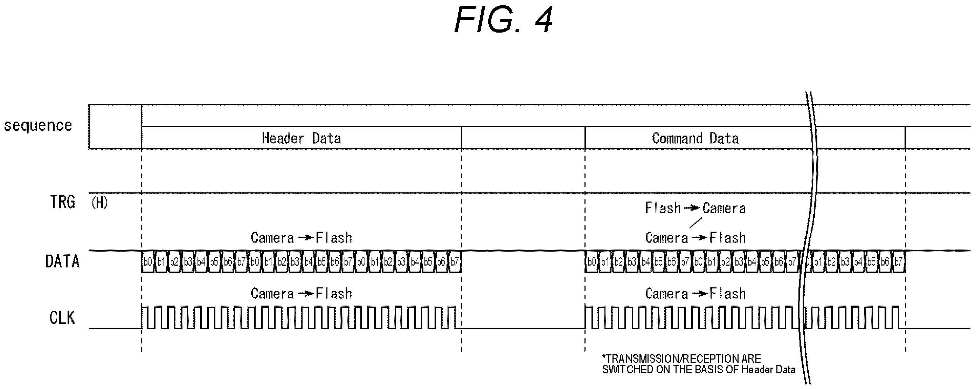

Fig. 4 illustrates an example of a communication sequence in the second communication standard.

As illustrated in Fig. 4, in the second communication standard, first, header data is transmitted from the camera body 12 to the commander 13A. The header data specifies the transmission direction between the camera body 12 and the commander 13A and a data size (number of bytes) of command data to be transmitted subsequent to the header data. Thereafter, command data corresponding to the data size specified by the header data is transmitted and received between the camera body 12 and the commander 13A.

The header data and the command data are divided in the second communication standard as described above, and therefore the camera body 12 can specify the data size of the command data by using the header data and transmit the command data compiled for the data size. That is, in the first communication standard, the command data is transmitted at a predetermined interval for each byte, whereas, in the second communication standard, the compiled command data is transmitted without such an interval.

Therefore, the second communication standard can reduce a time required to transmit the command data, as compared with the first communication standard. As a result, for example, the camera body 12 can reduce the release time lag by reducing a transmission time of a light emission command instructing the external flash 13 to emit light.

Transition between a synchronous mode and the asynchronous mode in the second communication standard and the light emission preparation time of the commander 13A will be described with reference to Fig. 5.

In the second communication standard, communication is normally performed between the camera body 12 and the commander 13A in the synchronous mode, and communication is performed in the asynchronous mode for a certain period before and after imaging by the camera body 12. For example, the communication between the camera body 12 and the commander 13A transitions from the synchronous mode to the asynchronous mode at a timing at which output of a preliminary light emission command is started in response to an operation of fully pressing the shutter button of the operation unit 22. Then, the communication between the camera body 12 and the commander 13A transitions from the asynchronous mode to the synchronous mode at a timing at which a main light emission trigger output via the signal line TRG returns from an L level to an H level after main light emission.

In the synchronous mode, a synchronous communication command is bidirectionally transmitted between the camera body 12 and the commander 13A at a certain cycle, and, for example, the light emission preparation time is transmitted from the commander 13A to the camera body 12.

In the asynchronous mode, the preliminary light emission command, a preliminary light emission trigger, a main light emission command, and the main light emission trigger are transmitted from the camera body 12 to the commander 13A, regardless of the cycle in the synchronous mode. The preliminary light emission command includes data indicating an amount of light to be emitted in the preliminary light emission, and the main light emission command includes data indicating an amount of light to be emitted in the main light emission.

Here, the external flash 13 receives the light emission command, makes preparation such as an internal setting regarding light emission, and then can actually emit light. That is, the external flash 13 cannot accept the light emission trigger until the preparation for light emission is completed. A time from when the reception of the light emission command is completed until when the external flash can accept the light emission trigger is the light emission preparation time. Therefore, the camera body 12 needs to transmit the light emission trigger at a timing at which the light emission preparation time elapses after the transmission of the light emission command is completed.

Therefore, as illustrated in Fig. 5, the camera body 12 outputs the preliminary light emission trigger when the communication unit 47 lowers the signal line TRG from the H level to the L level at a timing at which the light emission preparation time elapses after the transmission of the preliminary light emission command is completed. The light emitting control unit 64A controls the light emitting unit 65A in response to the preliminary light emission trigger, and thus the commander 13A emits light with a flash waveform as illustrated in Fig. 5.

Thereafter, in the camera body 12, the photometry unit 46 measures an amount of the light with which the subject has been irradiated in the preliminary light emission. The optimization processing unit 51 obtains an amount of light in the main light emission on the basis of the photometry result obtained by the measurement by the photometry unit 46 and controls the communication unit 47 to transmit the main light emission command including data indicating the amount of light.

Then, as illustrated in Fig. 5, the camera body 12 outputs the main light emission trigger when the communication unit 47 lowers the signal line TRG from the H level to the L level at a timing at which the light emission preparation time elapses after the transmission of the main light emission command is completed. The light emitting control unit 64A controls the light emitting unit 65A in response to the main light emission trigger, and thus the commander 13A emits light with a flash waveform as illustrated in Fig. 5.

As described above, in the second communication standard, it is possible to transmit the light emission preparation time from the commander 13A to the camera body 12 in the synchronous mode. Therefore, in the camera body 12, the optimization processing unit 51 controls a timing of outputting the light emission trigger on the basis of the light emission preparation time and can therefore optimize a timing of synchronizing the camera body 12 and the commander 13A, without changing the control of the commander 13A. This makes it possible to reduce the release time lag in the imaging system 11.

Further, in the second communication standard, it is possible to perform communication while separating command data regularly transmitted and received in the synchronous mode and command data transmitted and received in the asynchronous mode. In the asynchronous mode, only the minimum data necessary for light emission needs to be transmitted. Therefore, it is possible to reduce a communication time as an amount of communication data is reduced in the asynchronous mode. This also makes it possible to reduce the release time lag.

Here, the minimum data necessary for light emission transmitted in the asynchronous mode includes, for example, not only the data indicating the amount of light described above but also data indicating a light emission mode (flash or flat light emission).

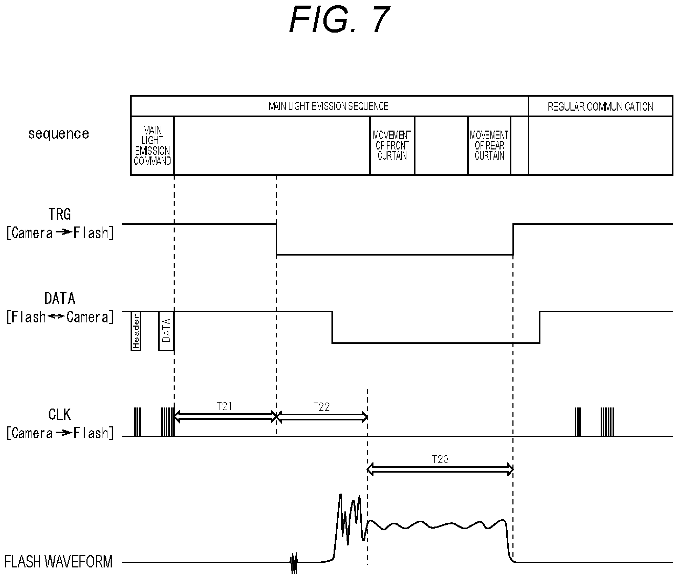

A normal main light emission sequence for emitting a flash and a high-speed synchronization main light emission sequence for emitting flat light will be described with reference to Figs. 6 and 7.

Fig. 6 illustrates an example of the normal main light emission sequence for emitting a flash.

As illustrated in Fig. 6, the signal line TRG is lowered from the H level to the L level at a timing at which the light emission preparation time T11 elapses after the transmission of the main light emission command is completed, and thus the main light emission trigger is output.

Then, in the normal main light emission sequence, the shutter control unit 44 controls the shutter drive unit 45 so that movement of the front curtain is completed before the main light emission trigger is output and movement of the rear curtain is started after the main light emission of the commander 13A ends. That is, the control is performed such that the commander 13A emits main light within a shutter full open time from the completion of the movement of the front curtain to the start of the movement of the rear curtain.

Fig. 7 illustrates an example of the high-speed synchronization main light emission sequence for emitting flat light.

As illustrated in Fig. 7, the signal line TRG is lowered from the H level to the L level at a timing at which a light emission preparation time T21 elapses after the transmission of the main light emission command is completed, and thus the main light emission trigger is output. Then, a time required to stabilize flat light emission after the main light emission trigger is output is defined as a light emission stabilization time T22, and a time during which the flat light emission has a stable amount of light is defined as a flat light emission time T23.

Here, in the imaging system 11, the shutter control unit 44 of the camera body 12 can notify the light emitting control unit 64A of the commander 13A of a shutter open/close time from the start of the movement of the front curtain to the completion of the movement of the rear curtain in accordance with the second communication standard. Meanwhile, the light emitting control unit 64A of the commander 13A can notify the shutter control unit 44 of the camera body 12 of the light emission stabilization time T22.

Therefore, in the high-speed synchronization main light emission sequence for emitting flat light, the light emitting control unit 64A can control flat light emission so that the flat light emission time T23 is minimized on the basis of the shutter open/close time in the camera body 12.

Further, the shutter control unit 44 can control the movement of the front curtain and the rear curtain so that exposure is performed immediately after the light emission stabilization time T22 in the commander 13A elapses.

The light emitting control unit 64A optimizes the flat light emission time T23 as described above, and thus it is possible to reduce, for example, consumption of power charged in a capacitor. Further, the optimization of the flat light emission time T23 can improve followability of continuous imaging in which a plurality of images is continuously captured in high-speed synchronization and, for example, can maximize the number of times of continuous imaging.

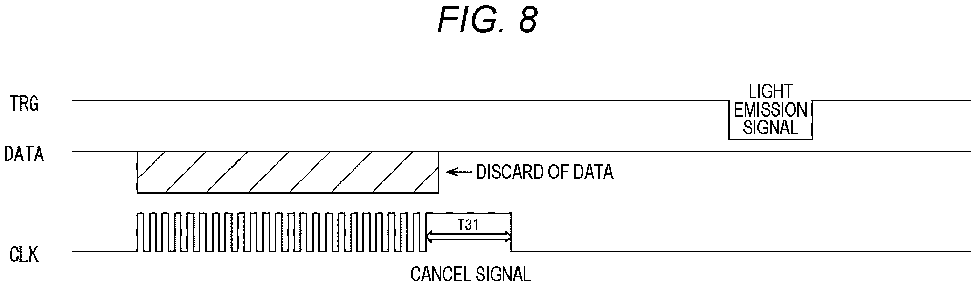

A cancel signal will be described with reference to Fig. 8.

As described above, communication data compiled for the predetermined data size can be transmitted and received in the second communication standard. Therefore, the shutter button of the operation unit 22 may be fully pressed during the transmission and reception of the communication data in the synchronous mode. In view of this, in the imaging system 11, in a case where the shutter button of the operation unit 22 is fully pressed during the transmission and reception of the communication data in the synchronous mode, a cancel signal for canceling the transmission and reception of the communication data can be output from the camera body 12 to the commander 13A.

As illustrated in Fig. **8****,** the cancel signal is output from the camera body 12 for a time T31 having a pulse width larger than that of the clock cycle output via the signal line CLK. Therefore, in the commander 13A, when measuring the time T31, the pulse width measurement unit 68A detects that the cancel signal has been output from the camera body 12 and notifies the optimization processing unit 71A of the detection. Therefore, the optimization processing unit 71A discards the communication data being received at the time when the cancel signal is detected and immediately ends the communication processing. Thereafter, the commander 13A can receive the light emission command and the light emission trigger as described above with reference to Fig. 5. Note that the cancel signal can also have a pulse width smaller than that of the clock cycle output via the signal line CLK and only needs to have a pulse width different from that of the clock cycle.

The cancel signal is adopted in the second communication standard as described above, and therefore, for example, it is possible to prevent the transmission and reception of the communication data in the synchronous mode from restricting imaging. For example, in a case where the synchronous mode transitions to the asynchronous mode after the transmission and reception of the communication data in the synchronous mode ends, a time from when the shutter button of the operation unit 22 is fully pressed until when the light emission command and the light emission trigger are transmitted becomes long. Further, in this case, the time until the transmission and reception of the communication data in the synchronous mode ends varies depending on the timing of fully pressing the shutter button of the operation unit 22. Therefore, it is assumed that the release time lag is not constant.

Meanwhile, the imaging system 11 immediately ends the communication processing at the time when the cancel signal is detected. This makes it possible to prevent the time until the light emission command and the light emission trigger are transmitted from being long and to make the release time lag constant. That is, the release time lag can be optimized.

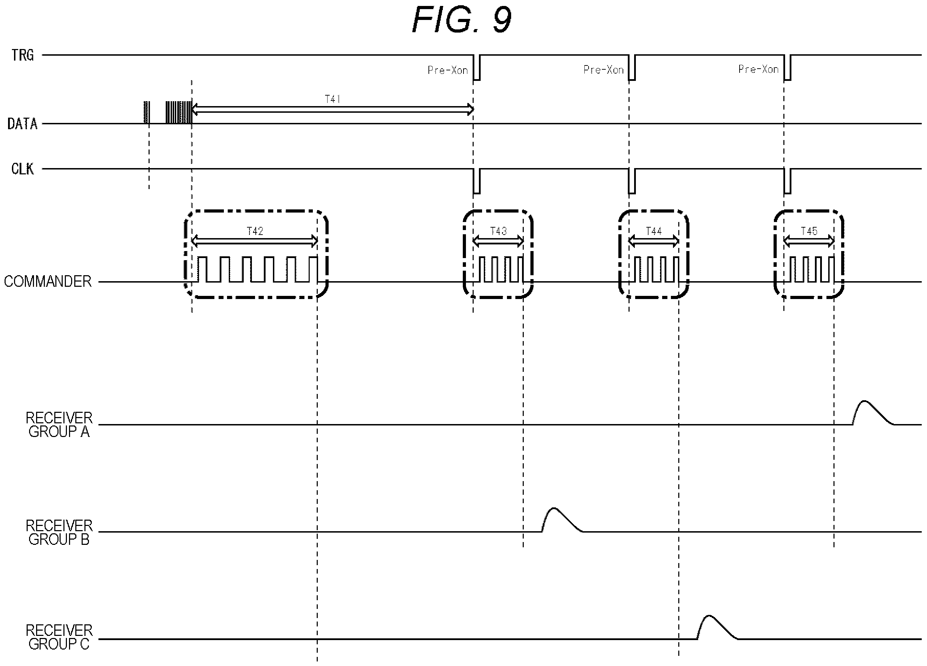

A light emission information notification and a light emission timing notification transmitted from the commander 13A to the receiver 13B will be described with reference to Figs. 9 to 12. Note that, in Figs. 9 to 12, a receiver groups A, B, and C each including a predetermined number of receivers 13B will be described.

Fig. 9 illustrates a first notification example of the light emission information notification and the light emission timing notification at the time of preliminary light emission.

For example, the camera body 12 outputs the preliminary light emission trigger (Pre-Xon in Fig. 9) three times at predetermined intervals at a timing at which a light emission preparation time T41 elapses after the transmission of the preliminary light emission command is completed. Here, in the first notification example at the time of the preliminary light emission, the light emission preparation time T41 is a time from when the transmission of the preliminary light emission command is completed until when the receivers 13B can accept the light emission timing notification after receiving the light emission information notification.

Then, in response to the preliminary light emission command, the commander 13A transmits the light emission information notification indicating an amount of light emitted in the preliminary light emission and a light emission mode to all the receivers 13B of the receiver groups A, B, and C via wireless communication by the wireless communication unit 66A. For example, the light emission information notification is repeatedly transmitted a predetermined number of times (six times in the example of Fig. 9) during a radio wave communication time T42.

Thereafter, in response to the first preliminary light emission trigger, the commander 13A transmits the light emission timing notification indicating a timing of the preliminary light emission via wireless communication by the wireless communication unit 66A. For example, in the first preliminary light emission trigger, the light emission timing notification is repeatedly transmitted to the receiver group B a predetermined number of times (four times in the example of Fig. 9) during a radio wave communication time T43. Therefore, the predetermined number of receivers 13B included in the receiver group B emit preliminary light with a flash waveform as illustrated in Fig. 9.

Similarly, in response to the second preliminary light emission trigger, the commander 13A repeatedly transmits the light emission timing notification to the receiver group C a predetermined number of times during a radio wave communication time T44. Further, in response to the third preliminary light emission trigger, the commander 13A repeatedly transmits the light emission timing notification to the receiver group A a predetermined number of times during a radio wave communication time T45. Therefore, the predetermined number of receivers 13B included in each of the receiver groups C and A emit preliminary light with a flash waveform as illustrated in Fig. 9.

As described above, in the first notification example at the time of the preliminary light emission, the light emission information notification is simultaneously transmitted to all the receivers 13B, and then the light emission timing notification is transmitted to each receiver group.

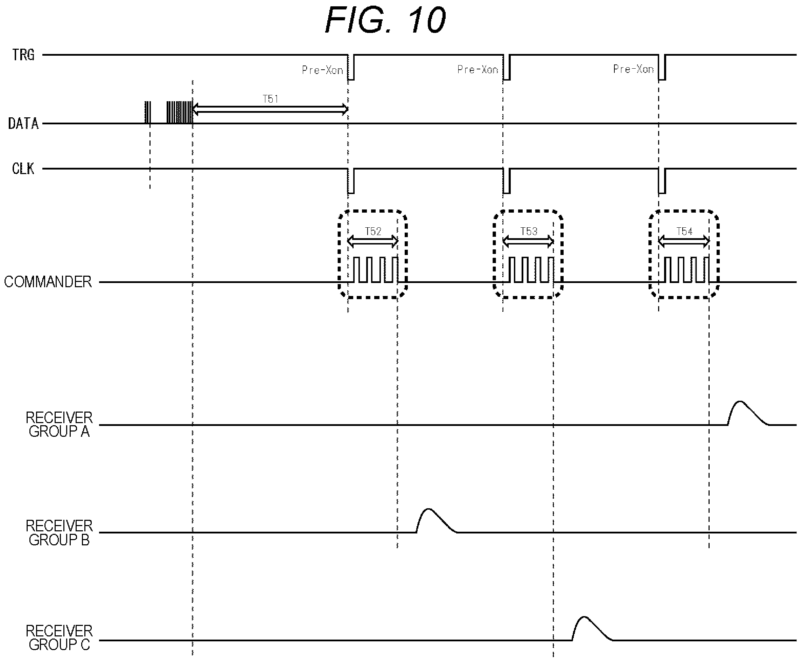

Fig. 10 illustrates a second notification example of the light emission information notification and the light emission timing notification at the time of the preliminary light emission.

For example, the camera body 12 outputs the preliminary light emission trigger three times at predetermined intervals at a timing at which a light emission preparation time T51 elapses after the transmission of the preliminary light emission command is completed. Here, in the second notification example at the time of the preliminary light emission, the light emission preparation time T51 is a time from when the transmission of the preliminary light emission command is completed until when the commander 13A can accept the preliminary light emission trigger.

Then, in response to the first preliminary light emission trigger, the commander 13A collectively transmits the light emission information notification and the light emission timing notification via wireless communication by the wireless communication unit 66A. For example, in the first preliminary light emission trigger, the light emission information notification and the light emission timing notification are repeatedly transmitted to the receiver group B a predetermined number of times (four times in the example of Fig. 10) during a radio wave communication time T52. Therefore, the predetermined number of receivers 13B included in the receiver group B emit preliminary light with a flash waveform as illustrated in Fig. 10.

Similarly, in response to the second preliminary light emission trigger, the commander 13A repeatedly and collectively transmits the light emission information notification and the light emission timing notification to the receiver group C a predetermined number of times during a radio wave communication time T53. Further, in response to the third preliminary light emission trigger, the commander 13A repeatedly and collectively transmits the light emission information notification and the light emission timing notification to the receiver group A a predetermined number of times during a radio wave communication time T54. Therefore, the predetermined number of receivers 13B included in each of the receiver groups C and A emit preliminary light with a flash waveform as illustrated in Fig. 10.

As described above, in the second notification example at the time of the preliminary light emission, the light emission information notification and the light emission timing notification are collectively transmitted to each receiver group. Therefore, in the second notification example at the time of the preliminary light emission, for example, it is possible to reduce the time from the transmission of the preliminary light emission command to the end of the preliminary light emission by the radio wave communication time T42 necessary to transmit the light emission information notification in the first notification example at the time of the preliminary light emission in Fig. 9. This makes it possible to reduce the release time lag.

Further, the light emission information notification and the light emission timing notification are collectively transmitted in the second notification example at the time of the preliminary light emission, and therefore it is possible to reduce the number of times of redundant communication that causes communication failure such as radio wave disturbance. This also makes it possible to reduce the release time lag.

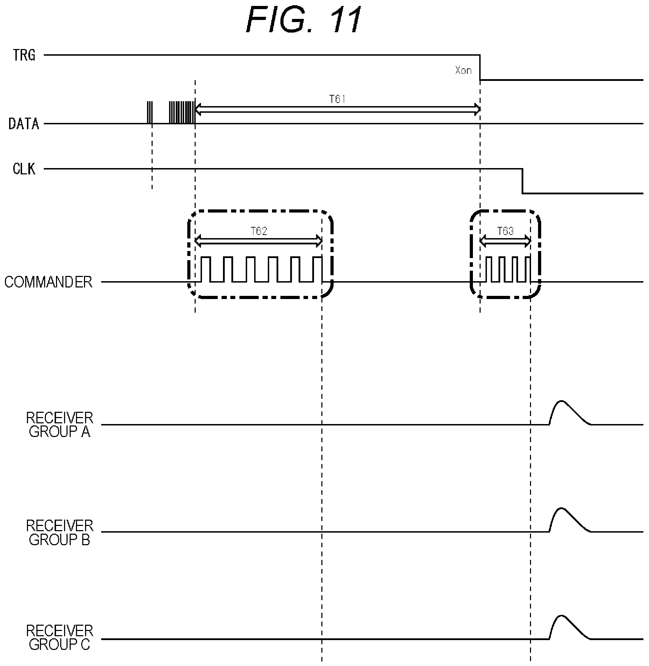

Fig. 11 illustrates a first notification example of the light emission information notification and the light emission timing notification at the time of main light emission.

For example, the camera body 12 outputs the main light emission trigger (Xon in Fig. 11) at a timing at which a light emission preparation time T61 elapses after the transmission of the main light emission command is completed. Here, in the first notification example at the time of the main light emission, the light emission preparation time T61 is a time from when the transmission of the main light emission command is completed until when the receiver 13B can accept the light emission timing notification after receiving the light emission information notification.

Then, in response to the main light emission command, the commander 13A transmits the light emission information notification indicating an amount of light emitted in the main light emission and the light emission mode to all the receivers 13B of the receiver groups A, B, and C via wireless communication by the wireless communication unit 66A. For example, the light emission information notification is repeatedly transmitted a predetermined number of times (six times in the example of Fig. 11) during a radio wave communication time T62.

Thereafter, in response to the main light emission trigger, the commander 13A transmits the light emission timing notification indicating a timing of the main light emission via wireless communication by the wireless communication unit 66A. For example, in the main light emission trigger, the light emission timing notification is repeatedly transmitted to all the receivers 13B of the receiver groups A, B, and C a predetermined number of times (four times in the example of Fig. 11) during a radio wave communication time T63. Therefore, all the receivers 13B of the receiver groups A, B, and C simultaneously emit main light with a flash waveform as illustrated in Fig. 11.

As described above, in the first notification example at the time of the main light emission, the light emission information notification is simultaneously transmitted to all the receivers 13B, and then the light emission timing notification is simultaneously transmitted to all the receivers 13B.

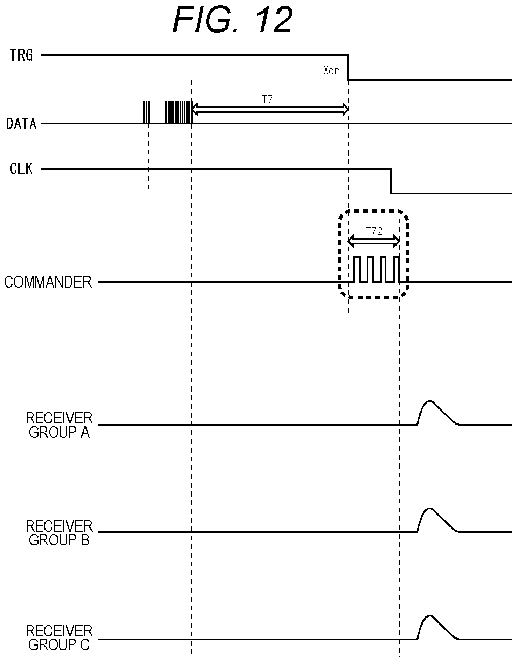

Fig. 12 illustrates a second notification example of the light emission information notification and the light emission timing notification at the time of the main light emission.

For example, the camera body 12 outputs the main light emission trigger at a timing at which a light emission preparation time T71 elapses after the transmission of the main light emission command is completed. Here, in the second notification example at the time of the main light emission, the light emission preparation time T71 is a time from when the transmission of the main light emission command is completed until when the commander 13A can accept the main light emission trigger.

Then, in response to the main light emission trigger, the commander 13A collectively transmits the light emission information notification and the light emission timing notification via wireless communication by the wireless communication unit 66A. For example, in the main light emission trigger, the light emission information notification and the light emission timing notification are repeatedly and collectively transmitted to all the receivers 13B of the receiver groups A, B, and C a predetermined number of times (four times in the example of Fig. 12) during a radio wave communication time T72. Therefore, all the receivers 13B of the receiver groups A, B, and C simultaneously emit main light with a flash waveform as illustrated in Fig. 12.

As described above, in the second notification example at the time of the main light emission, the light emission information notification and the light emission timing notification are collectively transmitted to all the receivers 13B. Therefore, in the second notification example at the time of the main light emission, for example, it is possible to reduce the time from the transmission of the main light emission command to the end of the main light emission by the radio wave communication time T62 necessary to transmit the light emission information notification in the first notification example at the time of the main light emission in Fig. 11. This makes it possible to reduce the release time lag.

Further, the light emission information notification and the light emission timing notification are collectively transmitted in the second notification example at the time of the main light emission, and therefore it is possible to reduce the number of times of redundant communication that causes communication failure such as radio wave disturbance. This also makes it possible to reduce the release time lag.

### <Optimization processing>

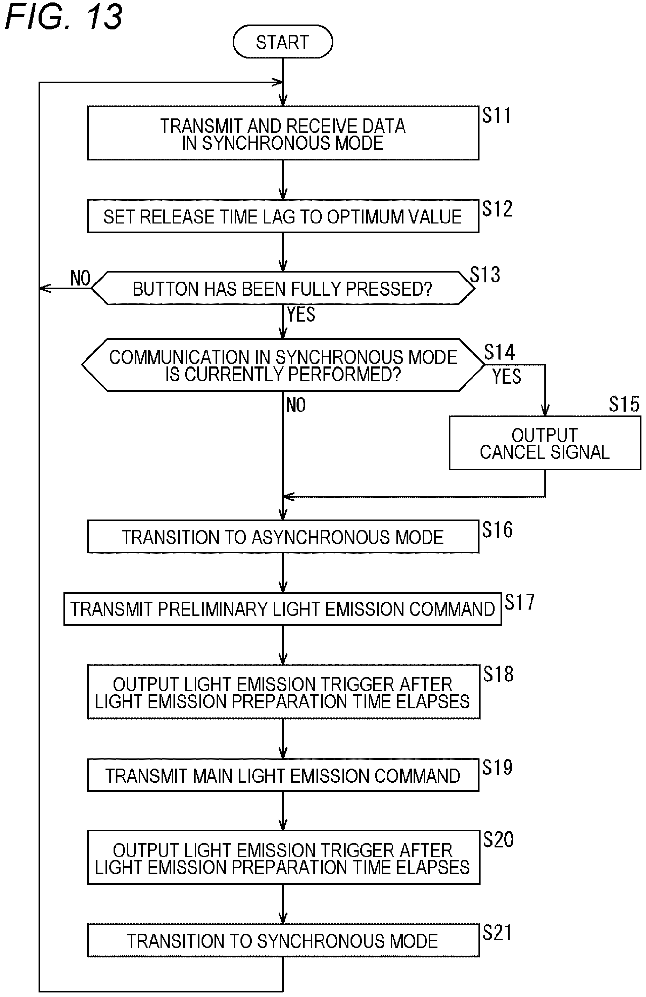

The optimization processing executed in the imaging system 11 will be described with reference to Figs. 13 to 15.

Fig. 13 is a flowchart showing the optimization processing executed in the camera body 12.

For example, when the camera body 12 to which the commander 13A is connected is activated and transitions from the communication according to the first communication standard to the communication according to the second communication standard, the processing is started. In step S11, the communication unit 47 transmits and receives data to and from the communication unit 67A of the commander 13A in the synchronous mode. Then, in this transmission and reception of the data, the communication unit 47 acquires the longest light emission preparation time among all the external flashes 13 included in the imaging system 11 and supplies the longest light emission preparation time to the optimization processing unit 51.

In step S12, the optimization processing unit 51 obtains an optimum release time lag for the entire imaging system 11 on the basis of the longest light emission preparation time among all the external flashes 13 acquired in step S11 and sets an optimum value thereof. Specifically, the shortest time, which is not shorter than the longest light emission preparation time and falls within a range of synchronizing exposure preparation of the camera body 12 and light emission, is calculated as the optimum value of the release time lag on the basis of information regarding the longest light emission preparation time transmitted from the external flash 13. More specifically, a time obtained by adding a predetermined extension time to the longer one of the light emission preparation time and an exposure preparation time is calculated as the optimum value of the release time lag. Note that the optimum value is calculated under the consideration that a release time lag time becomes constant (within a predetermined range) every time when a user performs an imaging operation. That is, the optimum value here indicates a value at which the release time lag time becomes constant (within a predetermined range) at least every time when the user performs an imaging operation and preferably indicates a value at which the release time lag time becomes constant (within a predetermined range) and the shortest.

In step S13, the operation signal acquisition unit 41 determines whether or not the shutter button has been fully pressed.

In a case where the operation signal acquisition unit 41 determines in step S13 that the shutter button has not been fully pressed, the processing returns to step S11, and thereafter, the synchronous mode is continued, and similar processing is repeatedly performed. Meanwhile, in a case where the operation signal acquisition unit 41 determines in step S13 that the shutter button has been fully pressed, an operation signal indicating that the shutter button has been fully pressed is supplied to the optimization processing unit 51, and the processing proceeds to step S14.

In step S14, the optimization processing unit 51 determines whether or not the communication unit 47 currently performs communication in the synchronous mode.

In a case where the optimization processing unit 51 determines in step S14 that the communication unit 47 currently performs communication in the synchronous mode, the processing proceeds to step S15.

In step S15, the optimization processing unit 51 controls the communication unit 47 to output such a cancel signal as described above with reference to Fig. 8 to the commander 13A. Therefore, the communication unit 47 outputs the cancel signal having a pulse width different from that of the clock cycle output via the signal line CLK.

After the processing of step S15 or in a case where it is determined in step S14 that the communication unit 47 does not currently perform communication in the synchronous mode, the processing proceeds to step S16.

In step S16, the communication unit 47 causes the communication with the communication unit 67A of the commander 13A to transition from the synchronous mode to the asynchronous mode.

In step S17, the optimization processing unit 51 controls the communication unit 47 to transmit a preliminary light emission command to the commander 13A.

In step S18, after a light emission preparation time according to the optimum value of the release time lag set in step S12 elapses from the end of the transmission of the preliminary light emission command in step S17, the optimization processing unit 51 controls the communication unit 47 to output a light emission trigger to the commander 13A.

In step S19, the optimization processing unit 51 controls the communication unit 47 to transmit a main light emission command to the commander 13A. At this time, the optimization processing unit 51 can include an amount of light in the main light emission based on a photometry result of preliminary light emission by the photometry unit 46 in the main light emission command.

In step S20, after the light emission preparation time according to the optimum value of the release time lag set in step S12 elapses from the end of the transmission of the main light emission command in step S19, the optimization processing unit 51 controls the communication unit 47 to output a light emission trigger to the commander 13A.

In step S21, after the communication unit 47 causes the communication with the communication unit 67A of the commander 13A to transition from the asynchronous mode to the synchronous mode, the processing returns to step S11, and thereafter, similar processing is repeatedly performed.

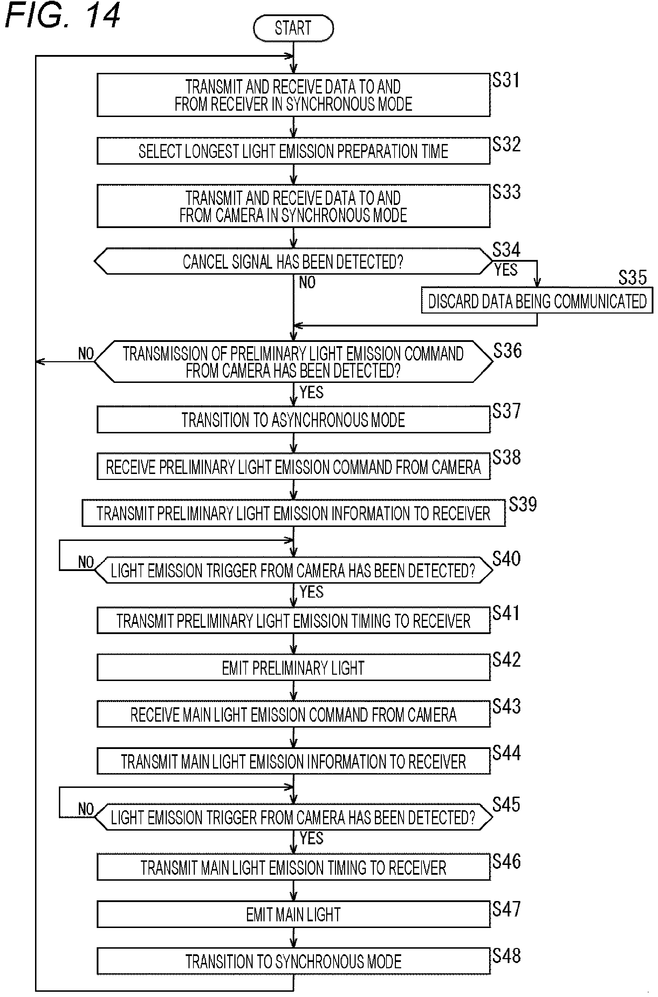

Fig. 14 is a flowchart showing the optimization processing executed in the commander 13A.

For example, when the camera body 12 to which the commander 13A is connected is activated, the communication according to the first communication standard transitions to the communication according to the second communication standard, and wireless communication is established between the wireless communication unit 66A of the commander 13A and the wireless communication unit 66B of the receiver 13B, the processing is started. Then, in step S31, the wireless communication unit 66A transmits and receives data of the receiver 13B necessary for being transmitted to the camera body 12 in the synchronous mode to and from the wireless communication unit 66B of the receiver 13B.

In step S32, the wireless communication unit 66B supplies light emission preparation times of all the receivers 13B acquired by the transmission and reception of the data in step S31 to the optimization processing unit 71A. Then, the optimization processing unit 71A selects the longest light emission preparation time from among the light emission preparation times of all the external flashes 13 included in the imaging system 11 including a light emission preparation time of the commander 13A.

In step S33, the communication unit 67A transmits and receives data to and from the communication unit 47 of the camera body 12 in the synchronous mode. Then, in this transmission and reception of the data, the communication unit 67A transmits the longest light emission preparation time selected by the optimization processing unit 71A in step S32 to the camera body 12.

In step S34, the optimization processing unit 71A determines whether or not a cancel signal has been detected. For example, when the cancel signal is output in step S15 of Fig. 13, the pulse width measurement unit 68A issues a notification that the pulse width different from that of the clock cycle output via the signal line CLK has been measured, and the optimization processing unit 71A can determine that the cancel signal has been detected.

In a case where the optimization processing unit 71A determines in step S34 that the cancel signal has been detected, the processing proceeds to step S35. In step S35, the optimization processing unit 71A controls the communication unit 67A to discard the data being communicated.

After the processing of step S35 or in a case where it is determined in step S34 that the cancel signal has not been detected, the processing proceeds to step S36.

In step S36, the optimization processing unit 71A determines whether or not transmission of a preliminary light emission command from the camera body 12 has been detected. For example, when the preliminary light emission command is transmitted from the camera body 12 in step S17 of Fig. 13, the optimization processing unit 71A determines that the transmission of the preliminary light emission command from the camera body 12 has been detected.

In a case where the optimization processing unit 71A determines in step S36 that the transmission of the preliminary light emission command from the camera body 12 has not been detected, the processing returns to step S31, and thereafter, the synchronous mode is continued, and similar processing is repeatedly performed.

Meanwhile, in a case where the optimization processing unit 71A determines in step S36 that the transmission of the preliminary light emission command from the camera body 12 has been detected, the processing proceeds to step S37.

In step S37, the communication unit 67A causes the communication with the communication unit 47 of the camera body 12 to transition from the synchronous mode to the asynchronous mode.

In step S38, the optimization processing unit 71A receives the preliminary light emission command transmitted from the camera body 12 in step S17 of Fig. 13.

In step S39, the optimization processing unit 71A controls the wireless communication unit 66A to transmit preliminary light emission information (a light emission information notification of preliminary light emission) in response to the preliminary light emission command received in step S38 and causes the wireless communication unit 66A to transmit the preliminary light emission information to the receiver 13B.

In step S40, the optimization processing unit 71A determines whether or not the light emission trigger output from the camera body 12 has been detected and suspends the processing until the optimization processing unit 71A determines that the light emission trigger is detected. Then, in a case where it is determined that the light emission trigger has been detected, the processing proceeds to step S41.

In step S41, the optimization processing unit 71A controls the wireless communication unit 66A to transmit a preliminary light emission timing (a light emission timing notification of the preliminary light emission) in response to the light emission trigger detected in step S40 and causes the wireless communication unit 66A to transmit the preliminary light emission timing to the receiver 13B. Here, in a case where the light emission information notification and the light emission timing notification are collectively transmitted and received as described with reference to Fig. 10, the processing in step S39 is not performed and the preliminary light emission information is also transmitted at the timing of step S41.

In step S42, the optimization processing unit 71A notifies the light emitting control unit 64A to emit preliminary light with the amount of light indicated by the preliminary light emission command received in step S38. In response to the above notification, the light emitting control unit 64A controls the light emission of the light emitting unit 65A, thereby emitting preliminary light.

In step S43, the optimization processing unit 71A receives the main light emission command transmitted from the camera body 12 in step S19 of Fig. 13.

In step S44, the optimization processing unit 71A controls the wireless communication unit 66A to transmit main light emission information (a light emission information notification of main light emission) in response to the main light emission command received in step S43 and causes the wireless communication unit 66A to transmit the main light emission information to the receiver 13B.

In step S45, the optimization processing unit 71A determines whether or not the light emission trigger output from the camera body 12 has been detected and suspends the processing until the optimization processing unit 71A determines that the light emission trigger is detected. Then, in a case where it is determined that the light emission trigger has been detected, the processing proceeds to step S46.

In step S46, the optimization processing unit 71A controls the wireless communication unit 66A to transmit a main light emission timing (a light emission timing notification of the main light emission) in response to the light emission trigger detected in step S45 and causes the wireless communication unit 66A to transmit the main light emission timing to the receiver 13B. Here, in a case where the light emission information notification and the light emission timing notification are collectively transmitted and received as described with reference to Fig. 12, the processing in step S44 is not performed and the main light emission information is also transmitted at the timing of step S46.

In step S47, the optimization processing unit 71A notifies the light emitting control unit 64A to emit main light with the amount of light indicated by the main light emission command received in step S43. In response to the above notification, the light emitting control unit 64A controls the light emission of the light emitting unit 65A, thereby emitting main light.

In step S48, after the communication unit 67A causes the communication with the communication unit 47 of the camera body 12 to transition from the asynchronous mode to the synchronous mode, the processing returns to step S31, and thereafter, similar processing is repeatedly performed.

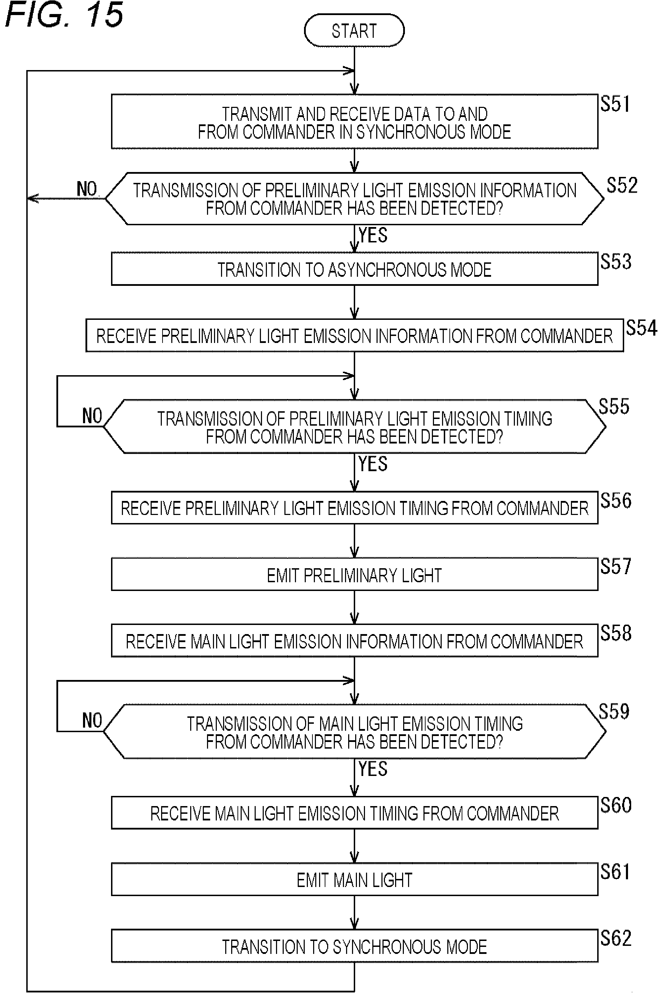

Fig. 15 is a flowchart showing the optimization processing executed in the receiver 13B.

For example, when the receiver 13B is activated and wireless communication is established between the wireless communication unit 66B of the receiver 13B and the wireless communication unit 66A of the commander 13A, the processing is started. Then, in step S51, the wireless communication unit 66B transmits and receives data of the receiver 13B necessary for being transmitted to the camera body 12 in the synchronous mode to and from the wireless communication unit 66A of the commander 13A.

In step S52, the optimization processing unit 71B determines whether or not transmission of preliminary light emission information from the commander 13A has been detected. For example, when the preliminary light emission information is transmitted from the commander 13A in step S39 of Fig. 14, the optimization processing unit 71B determines that the transmission of the preliminary light emission information from the commander 13A has been detected.

In a case where the optimization processing unit 71B determines in step S52 that the transmission of the preliminary light emission information from the commander 13A has not been detected, the processing returns to step S51, and thereafter, the synchronous mode is continued, and similar processing is repeatedly performed.

Meanwhile, in a case where the optimization processing unit 71B determines in step S52 that the transmission of the preliminary light emission information from the commander 13A has been detected, the processing proceeds to step S53.

In step S53, as the communication between the commander 13A and the camera body 12 transitions from the synchronous mode to the asynchronous mode, the receiver 13B also transitions to the asynchronous mode and prepares for light emission processing.

In step S54, the optimization processing unit 71B receives the preliminary light emission information transmitted from the commander 13A in step S39 of Fig. 14.

In step S55, the optimization processing unit 71B determines whether or not transmission of a preliminary light emission timing from the commander 13A has been detected and suspends the processing until the optimization processing unit 71B determines that the transmission of the preliminary light emission timing from the commander 13A is detected. For example, when the preliminary light emission timing is transmitted from the commander 13A in step S41 of Fig. 14, the optimization processing unit 71B determines that the transmission of the preliminary light emission timing from the commander 13A has been detected. In this case, the processing proceeds to step S56.

In step S56, the optimization processing unit 71B receives the preliminary light emission timing transmitted from the commander 13A in step S41 of Fig. 14. Here, in a case where the light emission information notification and the light emission timing notification are collectively transmitted and received as described with reference to Fig. 10, the processing in step S54 is not performed and the preliminary light emission information is also received at the timing of step S56.

In step S57, the optimization processing unit 71B notifies the light emitting control unit 64B to emit preliminary light with the amount of light indicated by the preliminary light emission information received in step S54 at the preliminary light emission timing received in step S56. In response to the above notification, the light emitting control unit 64B controls light emission of the light emitting unit 65B, thereby emitting preliminary light.

In step S58, the optimization processing unit 71B receives the main light emission information transmitted from the commander 13A in step S44 of Fig. 14.

In step S59, the optimization processing unit 71B determines whether or not transmission of a main light emission timing from the commander 13A has been detected and suspends the processing until the optimization processing unit 71B determines that the transmission of the main light emission timing from the commander 13A is detected. For example, when the main light emission timing is transmitted from the commander 13A in step S46 of Fig. 14, the optimization processing unit 71B determines that the transmission of the main light emission timing from the commander 13A has been detected. In this case, the processing proceeds to step S60.

In step S60, the optimization processing unit 71B receives the main light emission timing transmitted from the commander 13A in step S46 of Fig. 14. Here, in a case where the light emission information notification and the light emission timing notification are collectively transmitted and received as described with reference to Fig. 12, the processing in step S58 is not performed and the main light emission information is also received at the timing of step S60.

In step S61, the optimization processing unit 71B notifies the light emitting control unit 64B to emit main light with the amount of light indicated by the main light emission information received in step S58 at the main light emission timing received in step S60. In response to the above notification, the light emitting control unit 64B controls the light emission of the light emitting unit 65B, thereby emitting main light.

In step S62, as the communication between the commander 13A and the camera body 12 transitions from the asynchronous mode to the synchronous mode, the receiver 13B also transitions to the synchronous mode. Then, the processing returns to step S51, and thereafter, similar processing is repeatedly performed.

By performing the optimization processing as described above, the release time lag can be optimized in the imaging system 11.

### <Configuration example of computer>

Next, the series of processing (control method) described above can be performed by hardware or software. In a case where the series of processing is executed by software, a program forming the software is installed in a general-purpose computer or the like.

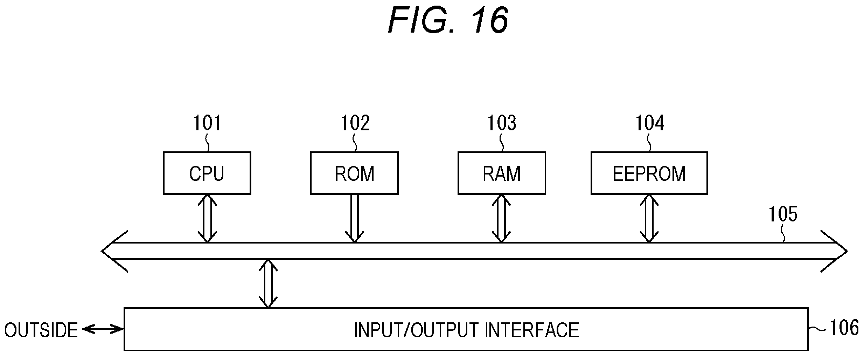

Fig. 16 is a block diagram showing a configuration example of hardware of a computer that executes the series of processing described above by a program.

In the computer, a central processing unit (CPU) 101, a read only memory (ROM) 102, a random access memory (RAM) 103, and an electronically erasable and programmable read only memory (EEPROM) 104 are connected to one another by a bus 105. The bus 105 is further connected to an input/output interface 106, and the input/output interface 106 is connected to the outside.

In the computer configured as described above, for example, the series of processing described above is performed by, for example, the CPU 101 loading a program stored in the ROM 102 and the EEPROM 104 into the RAM 103 via the bus 105 and executing the program. Further, the program executed by the computer (CPU 101) can be written in advance in the ROM 102 or can be installed in the EEPROM 104 from the outside via the input/output interface 106 or can be updated.

Here, in the present specification, the processing performed by the computer according to the program is not necessarily performed in time series in the order shown in the flowcharts. That is, the processing performed by the computer according to the program also includes processing executed in parallel or individually (e.g., parallel processing or processing by an object).

Further, the program may be processed by one computer (processor) or may be processed in a distributed manner by a plurality of computers. Furthermore, the program may be transferred to a remote computer and be executed therein.

Still further, in the present specification, a system means a set of a plurality of components (devices, modules (parts), and the like), and it does not matter whether or not all the components are included in the same housing. Therefore, a plurality of devices included in separate housings and connected via a network and a single device including a plurality of modules in a single housing are both systems.

Further, for example, a configuration described as a single device (or processing unit) may be divided and configured as a plurality of devices (or processing units). On the contrary, a configuration described as a plurality of devices (or processing units) in the above description may be integrally configured as a single device (or processing unit). Further, as a matter of course, a configuration other than the configurations described above may be added to the configuration of each device (or each processing unit). Furthermore, a part of a configuration of a certain device (or processing unit) may be included in a configuration of another device (or another processing unit) as long as a configuration or operation of the entire system is substantially the same.

Further, for example, the present technology can have a configuration of cloud computing in which a single function is shared and jointly processed by a plurality of devices via a network.

Further, for example, the program described above can be executed by an arbitrary device. In that case, the device only needs to have a necessary function (e.g., a functional block) to obtain necessary information.

Further, for example, each of the steps described in the above flowcharts can be executed by a single device, or can be executed by being shared by a plurality of devices. Furthermore, in a case where a single step includes a plurality of processes, the plurality of processes included in the single step can be executed by a single device or can be executed by being shared by a plurality of devices. In other words, the plurality of processes included in the single step can also be executed as processes in a plurality of steps. On the contrary, the processes described as the plurality of steps can also be integrally executed as a single step.

Note that, in the program executed by the computer, processes in steps describing the program may be executed in time series in the order described in the present specification or may be executed in parallel or individually at a necessary timing such as when a call is made. That is, the processes in the respective steps may be executed in order different from the order described above as long as there is no contradiction. Further, the processes in the steps describing the program may be executed in parallel with processes of another program or may be executed in combination with processes of another program.

Note that a plurality of present technologies described in the present specification can each be implemented alone independently as long as there is no contradiction. As a matter of course, a plurality of arbitrary present technologies can also be implemented in combination. For example, a part of or the entire present technology described in any embodiment can be implemented in combination with a part of or the entire present technology described in another embodiment. Further, a part of or the entire arbitrary present technology described above can also be implemented in combination with another technology not described above.

Note that, although the external flash 13 has been described in the present embodiment, the present technology is not limited to a flash light emitting device such as the external flash 13 and is applicable to other various external light emitting devices.

Note that the present embodiments are not limited to the above embodiments, and can be variously modified within the scope of the amended claims. Further, the effects described in the present specification are merely examples and are not limited, and additional effects may be obtained.

### REFERENCE SIGNS LIST

- 11: Imaging system
- 12: Camera body
- 13: External flash
- 13A: Commander
- 13B: Receiver
- 21: Display unit
- 22: Operation unit
- 31: Display unit
- 32: Operation unit
- 41: Operation signal acquisition unit
- 42: Display control unit
- 43: Storage unit
- 44: Shutter control unit
- 45: Shutter drive unit
- 46: Photometry unit
- 47: Communication unit
- 48: Control unit
- 51: Optimization processing unit
- 52: Setting linkage processing unit
- 53: Communication compatible processing unit
- 61: Operation signal acquisition unit
- 62: Display control unit
- 63: Storage unit
- 64: Light emitting control unit
- 65: Light emitting unit
- 66: Wireless communication unit
- 67: Communication unit
- 68: Pulse width measurement unit
- 69: Control unit
- 71: Optimization processing unit
- 72: Setting linkage processing unit
- 73: Communication compatible processing unit

## Claims

1. An imaging system (11) comprising:
an external flash (13) including
a first communication unit (67A) that transmits a light emission preparation time from when reception of a light emission command is completed until when a light emission trigger is acceptable, the first communication unit (67A) transmitting the light emission preparation time according to a communication protocol; and
an imaging device (12) including
a second communication unit (47) that communicates with the first communication unit (67A) of the external flash and acquires the light emission preparation time according to the communication protocol, wherein header data is transmitted to the first communication unit that specifies the transmission direction and a data size of the light emission command to be transmitted subsequent to the header data and
an optimization processing unit (51) that optimizes an output timing of the light emission trigger on a basis of the light emission preparation time acquired by the second communication unit.

2. The imaging system according to claim 1, wherein
the second communication unit acquires, from the external flash mounted on the imaging device, the longest light emission preparation time among the light emission preparation times of a plurality of the external flashes and supplies the longest light emission preparation time to the optimization processing unit, and
the optimization processing unit outputs the light emission trigger on a basis of the longest light emission preparation time supplied from the second communication unit.

3. The imaging system according to claim 1, wherein
the first communication unit transmits, to the imaging device, a light emission stabilization time required to stabilize flat light emission in high-speed synchronization,
the second communication unit transmits, to the external flash, a shutter open/close time from start of movement of a front curtain to completion of movement of a rear curtain in the imaging device,
in the external flash, a flat light emission time during which the flat light emission has a stable amount of light is controlled on a basis of the shutter open/close time, and
in the imaging device, the movement of the front curtain and the rear curtain is controlled on a basis of the light emission stabilization time.

4. The imaging system according to claim 1, wherein
the external flash is mounted on the imaging device and further includes a wireless communication unit that performs wireless communication with another external flash not mounted on the imaging device.

5. The imaging system according to claim 4, wherein
in response to the light emission command transmitted from the imaging device, the external flash collectively transmits a light emission information notification indicating an amount of light of light emission and a light emission mode and a light emission timing notification indicating a timing of the light emission from the wireless communication unit to a plurality of the other external flashes.

6. The imaging system according to claim 4, wherein
in response to the light emission command transmitted from the imaging device, the external flash transmits a light emission information notification indicating an amount of light of light emission and a light emission mode from the wireless communication unit to a plurality of the other external flashes in advance and transmits a light emission timing notification indicating a timing of the light emission from the wireless communication unit to the plurality of the other external flashes at the time of the light emission.

7. A control method comprising:
causing a control device of an external flash
to transmit a light emission preparation time from when reception of a light emission command is completed until when a light emission trigger is acceptable, the first communication unit (67A) transmitting the light emission preparation time according to a communication protocol; and
causing a control device of the imaging device
to communicate with the external flash and acquire the light emission preparation time according to the communication protocol, wherein header data is transmitted to the first communication unit that specifies the transmission direction and a data size of the light emission command to be transmitted subsequent to the header data, and
to optimize an output timing of the light emission trigger on a basis of the acquired light emission preparation time.

8. A program for causing a computer of a control device of an external flash to execute the processing of
transmitting a light emission preparation time from when reception of a light emission command is completed until when a light emission trigger is acceptable, the first communication unit (67A) transmitting the light emission preparation time according to a communication protocol and
causing a computer of a control device of an imaging device to execute the processing of
communicating with the external flash and acquiring the light emission preparation time according to the communication protocol, wherein header data is transmitted to the first communication unit that specifies the transmission direction and a data size of the light emission command to be transmitted subsequent to the header data, and
optimizing an output timing of the light emission trigger on a basis of the acquired light emission preparation time.

## Patentansprüche

1. Bildgebungssystem (11), umfassend:
einen externen Blitz (13), einschließlich
einer ersten Kommunikationseinheit (67A), die eine Lichtemissionsvorbereitungszeit von dem Zeitpunkt an überträgt, an dem der Empfang eines Lichtemissionsbefehls abgeschlossen ist, bis zu dem Zeitpunkt, an dem ein Lichtemissionsauslöser akzeptabel ist, wobei die erste Kommunikationseinheit (67A) die Lichtemissionsvorbereitungszeit gemäß einem Kommunikationsprotokoll überträgt, und
eine Bildgebungsvorrichtung (12), einschließlich
einer zweiten Kommunikationseinheit (47), die mit der ersten Kommunikationseinheit (67A) des externen Blitzes kommuniziert und die Lichtemissionsvorbereitungszeit gemäß dem Kommunikationsprotokoll erfasst, wobei Header-Daten an die erste Kommunikationseinheit übertragen werden, welche die Übertragungsrichtung und eine Datengröße des Lichtemissionsbefehls spezifizieren, der im Anschluss an die Header-Daten übertragen werden soll, und
einer Optimierungsverarbeitungseinheit (51), die einen Ausgabezeitpunkt des Lichtemissionsauslösers auf der Grundlage der Lichtemissionsvorbereitungszeit, die von der zweiten Kommunikationseinheit erfasst wurde, optimiert.

2. Bildgebungssystem nach Anspruch 1, wobei
die zweite Kommunikationseinheit von dem an der Bildgebungsvorrichtung angebrachten externen Blitz die längste Lichtemissionsvorbereitungszeit unter den Lichtemissionsvorbereitungszeiten einer Vielzahl von externen Blitzen erfasst und die längste Lichtemissionsvorbereitungszeit an die Optimierungsverarbeitungseinheit bereitstellt, und
die Optimierungsverarbeitungseinheit den Lichtemissionsauslöser auf Grundlage der längsten Lichtemissionsvorbereitungszeit ausgibt, die von der zweiten Kommunikationseinheit bereitgestellt wird.

3. Bildgebungssystem nach Anspruch 1, wobei
die erste Kommunikationseinheit eine Lichtemissionsstabilisierungszeit, die zur Stabilisierung einer flachen Lichtemission bei Hochgeschwindigkeitssynchronisation erforderlich ist, an die Bildgebungsvorrichtung überträgt,
die zweite Kommunikationseinheit eine Blendenöffnungs-/-schließzeit vom Beginn der Bewegung eines vorderen Vorhangs bis zum Abschluss der Bewegung eines hinteren Vorhangs in der Bildgebungsvorrichtung an den externen Blitz überträgt,
in dem externen Blitz eine flache Lichtemissionszeit, während der die flache Lichtemission eine stabile Lichtmenge aufweist, auf der Grundlage der Blendenöffnungs-/-schließzeit gesteuert wird, und
in der Bildgebungsvorrichtung die Bewegung des vorderen und des hinteren Vorhangs auf Grundlage der Lichtemissionsstabilisierungszeit gesteuert wird.

4. Bildgebungssystem nach Anspruch 1, wobei
der externe Blitz auf der Bildgebungsvorrichtung angebracht ist und ferner eine drahtlose Kommunikationseinheit einschließt, die eine drahtlose Kommunikation mit einem weiteren externen Blitz durchführt, der nicht auf der Bildgebungsvorrichtung angebracht ist.

5. Bildgebungssystem nach Anspruch 4, wobei
als Reaktion auf den Lichtemissionsbefehl, der von der Bildgebungsvorrichtung übertragen wird, der externe Blitz eine Lichtemissionsinformationsbenachrichtigung, die eine Lichtmenge der Lichtemission und einen Lichtemissionsmodus angibt, und eine Lichtemissionszeitpunktbenachrichtigung, die einen Zeitpunkt der Lichtemission angibt, gemeinsam von der drahtlosen Kommunikationseinheit an eine Vielzahl der anderen externen Blitze überträgt.

6. Bildgebungssystem nach Anspruch 4, wobei
als Reaktion auf den Lichtemissionsbefehl, der von der Bildgebungsvorrichtung übertragen wird, der externe Blitz im Voraus eine Lichtemissionsinformationsbenachrichtigung, die eine Lichtmenge der Lichtemission und einen Lichtemissionsmodus angibt, von der drahtlosen Kommunikationseinheit an eine Vielzahl der anderen externen Blitze überträgt und zum Zeitpunkt der Lichtemission eine Lichtemissionszeitpunktbenachrichtigung, die einen Zeitpunkt der Lichtemission angibt, von der drahtlosen Kommunikationseinheit an die Vielzahl der anderen externen Blitze überträgt.

7. Steuerungsverfahren, umfassend:
Veranlassen einer Steuervorrichtung eines externen Blitzes
zum Übertragen einer Lichtemissionsvorbereitungszeit von dem Zeitpunkt, an dem der Empfang eines Lichtemissionsbefehls abgeschlossen ist, bis zu dem Zeitpunkt, an dem ein Lichtemissionsauslöser akzeptabel ist, wobei die erste Kommunikationseinheit (67A) die Lichtemissionsvorbereitungszeit gemäß einem Kommunikationsprotokoll überträgt; und
Veranlassen einer Steuervorrichtung der Bildgebungsvorrichtung
zum Kommunizieren mit dem externen Blitz und zum Erfassen der Lichtemissionsvorbereitungszeit gemäß dem Kommunikationsprotokoll, wobei Header-Daten an die erste Kommunikationseinheit übertragen werden, welche die Übertragungsrichtung und eine Datengröße des Lichtemissionsbefehls spezifizieren, der im Anschluss an die Header-Daten übertragen werden soll, und
zum Optimieren eines Ausgabezeitpunkts des Lichtemissionsauslösers auf der Grundlage der erfassten Lichtemissionsvorbereitungszeit.

8. Programm, das eine Rechenvorrichtung einer Steuervorrichtung eines externen Blitzes dazu veranlasst, die Verarbeitung des
Übertragens einer Lichtemissionsvorbereitungszeit von dem Zeitpunkt, an dem der Empfang eines Lichtemissionsbefehls abgeschlossen ist, bis zu dem Zeitpunkt, an dem ein Lichtemissionsauslöser akzeptabel ist, auszuführen, wobei die erste Kommunikationseinheit (67A) die Lichtemissionsvorbereitungszeit gemäß einem Kommunikationsprotokoll überträgt, und
das eine Rechenvorrichtung einer Steuervorrichtung einer Bildgebungsvorrichtung dazu veranlasst, die Verarbeitung der
Kommunikation mit dem externen Blitz und des Erfassens der Lichtemissionsvorbereitungszeit gemäß dem Kommunikationsprotokoll, wobei Header-Daten an die erste Kommunikationseinheit übertragen werden, welche die Übertragungsrichtung und eine Datengröße des Lichtemissionsbefehls spezifizieren, der im Anschluss an die Header-Daten übertragen werden soll, und
des Optimierens eines Ausgabezeitpunkts des Lichtemissionsauslösers auf der Grundlage der erfassten Lichtemissionsvorbereitungszeit auszuführen.

## Revendications

1. Système d'imagerie (11) comprenant :
un flash externe (13) comportant
une première unité de communication (67A) qui transmet une durée de préparation d'émission de lumière entre le moment où la réception d'une instruction d'émission de lumière est terminée et le moment où un déclencheur d'émission de lumière est acceptable, la première unité de communication (67A) transmettant la durée de préparation d'émission de lumière selon un protocole de communication ; et
un dispositif d'imagerie (12) comportant
une seconde unité de communication (47) qui communique avec la première unité de communication (67A) du flash externe et acquiert la durée de préparation d'émission de lumière selon le protocole de communication, dans lequel des données d'en-tête sont transmises à la première unité de communication qui spécifie la direction de transmission et une taille de données de l'instruction d'émission de lumière à transmettre à la suite des données d'entête, et
une unité de traitement d'optimisation (51) qui optimise une synchronisation de délivrance du déclencheur d'émission de lumière sur la base de la durée de préparation d'émission de lumière acquise par la seconde unité de communication.

2. Dispositif d'imagerie selon la revendication 1, dans lequel
la seconde unité de communication acquiert, à partir du flash externe monté sur le dispositif d'imagerie, la durée de préparation d'émission de lumière la plus longue parmi les durées de préparation d'émission de lumière d'une pluralité des flashs externes et fournit la durée de préparation d'émission de lumière la plus longue à l'unité de traitement d'optimisation, et
l'unité de traitement d'optimisation délivre le déclencheur d'émission de lumière sur la base de la durée de préparation d'émission de lumière la plus longue fournie par la seconde unité de communication.

3. Dispositif d'imagerie selon la revendication 1, dans lequel
la première unité de communication transmet, au dispositif d'imagerie, une durée de stabilisation d'émission de lumière nécessaire pour stabiliser l'émission de lumière plate en synchronisation à grande vitesse,
la seconde unité de communication transmet, au flash externe, une durée d'ouverture/fermeture d'obturateur entre le début du mouvement d'un rideau avant et la fin du mouvement d'un rideau arrière dans le dispositif d'imagerie,
dans le flash externe, une durée d'émission de lumière plate pendant laquelle l'émission de lumière plate a une quantité stable de lumière est commandée sur la base de la durée d'ouverture/fermeture d'obturateur, et
dans le dispositif d'imagerie, le mouvement du rideau avant et du rideau arrière est commandé sur la base de la durée de stabilisation d'émission de lumière.

4. Dispositif d'imagerie selon la revendication 1, dans lequel
le flash externe est monté sur le dispositif d'imagerie et comporte en outre une unité de communication sans fil qui assure une communication sans fil avec un autre flash externe non monté sur le dispositif d'imagerie.

5. Dispositif d'imagerie selon la revendication 4, dans lequel
en réponse à l'instruction d'émission de lumière transmise par le dispositif d'imagerie, le flash externe transmet collectivement une notification d'information d'émission de lumière indiquant une quantité de lumière d'émission de lumière et un mode d'émission de lumière, ainsi qu'une notification de synchronisation d'émission de lumière indiquant une synchronisation de l'émission de lumière de l'unité de communication sans fil à une pluralité des autres flashs externes.

6. Dispositif d'imagerie selon la revendication 4, dans lequel
en réponse à l'instruction d'émission de lumière transmise par le dispositif d'imagerie, le flash externe transmet une notification d'information d'émission de lumière indiquant une quantité de lumière d'émission de lumière et un mode d'émission de lumière de l'unité de communication sans fil à une pluralité des autres flashes externes à l'avance et transmet une notification de synchronisation d'émission de lumière indiquant une synchronisation de l'émission de lumière de l'unité de communication sans fil à la pluralité des autres flashes externes au moment de l'émission de lumière.

7. Procédé de commande comprenant :
le fait d'amener un dispositif de commande d'un flash externe
à transmettre une durée de préparation d'émission de lumière entre le moment où la réception d'une instruction d'émission de lumière est terminée et le moment où un déclencheur d'émission de lumière est acceptable, la première unité de communication (67A) transmettant la durée de préparation d'émission de lumière selon un protocole de communication ; et
le fait d'amener un dispositif de commande du dispositif d'imagerie
à communiquer avec le flash externe et acquérir la durée de préparation d'émission de lumière selon le protocole de communication, dans lequel des données d'en-tête sont transmises à la première unité de communication qui spécifie la direction de transmission et une taille de données de l'instruction d'émission de lumière à transmettre à la suite des données d'en-tête, et
à optimiser une synchronisation de délivrance du déclencheur d'émission de lumière sur la base de la durée de préparation d'émission de lumière acquise.

8. Programme permettant d'amener un ordinateur d'un dispositif de commande d'un flash externe à exécuter le traitement consistant à
transmettre une durée de préparation d'émission de lumière entre le moment où la réception d'une instruction d'émission de lumière est terminée et le moment où un déclencheur d'émission de lumière est acceptable, la première unité de communication (67A) transmettant la durée de préparation d'émission de lumière selon un protocole de communication et
amener un ordinateur d'un dispositif de commande d'un dispositif d'imagerie à exécuter le traitement consistant à
communiquer avec le flash externe et acquérir la durée de préparation d'émission de lumière selon le protocole de communication, dans lequel des données d'en-tête sont transmises à la première unité de communication qui spécifie la direction de transmission et une taille de données de l'instruction d'émission de lumière à transmettre à la suite des données d'en-tête, et
optimiser une synchronisation de délivrance du déclencheur d'émission de lumière sur la base de la durée de préparation d'émission de lumière acquise.
